# EUROPÄISCHE PATENTSCHRIFT

(11) **EP 0 738 065 B1**
(45) Veröffentlichungstag und Bekanntmachung des Hinweises auf die Patenterteilung: **19.05.2004**
(21) Anmeldenummer: 96104561.4
(22) Anmeldetag: 22.03.1996
(51) Int. Cl.: H04M 11/04, H04M 11/02

(54) **Fernüberwachungsvorrichtung**
Remote monitoring device
Dispositif de télésurveillance

(30) Priorität: 10.04.1995 DE 19512959
(43) Veröffentlichungstag der Anmeldung: 16.10.1996
(73) Patentinhaber: ALCATEL, 75008 Paris (FR)
(72) Erfinder: Peters, Wolfgang, Dr., 71732 Tamm (DE)
(74) Vertreter: Knecht, Ulrich Karl, Dipl.-Ing.

(56) Entgegenhaltungen:
- EP-A- 0 429 364
- DE-A- 3 827 928
- US-A- 3 816 662
- US-A- 4 825 457
- US-A- 5 027 383

## Beschreibung

Die Erfindung betrifft eine Fernüberwachungsvorrichtung für mindestens ein zu überwachendes Objekt, einer zu schützenden Person.

Aus dem Stand der Technik sind bereits Systeme bekannt, mit deren Hilfe zu überwachende Objekte, wie z.B. Wohnhäuser in einer einfachen und effektiven Weise geschützt werden können. Ein bekanntes Beispiels dafür ist das System 'TeleNachbar'. So wird hierbei beispielsweise mittels eines handelsüblichen Sensors ein unerwünschtes Vorkommnis innerhalb eines Hauses oder einer Wohnung registriert, dadurch dann eine Zieltaste eines Telefons aktiviert wird, welches dann eine vorher verabredete Rufnummer wählt, nämlich die eines autorisierten Nachbarn. Dieser erkennt, daß von dem zu überwachenden Objekt aus ein automatischer Anruf gestartet wurde und hat die Möglichkeit, ein spezielles Telefonmikrofon einzuschalten, welches in das zu überwachenden Objekt hineinhört. Natürlich kann bei dem vorab vorgestellten System 'TeleNachbar' der autorisierte Nachbar auch der Eigentümer des zu überwachenden Objektes selbst sein, der einen Anruf auf z.B. seine Büronummer umgeleitet hat.

Ebenso wird in dem Stand der Technik vorgestellt, daß, um Fehlalarme beim Hineinhören auszuschließen, es wünschenswert wäre, "hineinzusehen". Dies könnte mittels eines ISDN-Bildtelefons erfolgen, welches mittels einer Objektkamera mit integriertem Bewegungsmelder ausgestattet ist. Der Bewegungsmelder initiiert bei einem unerwünschten Vorkommnis den Aufbau der Bildtelefonverbindung zu unserem autorisierten Nachbarn, und dieser kann gegebenenfalls die Polizei herbeirufen.

Das vorab vorgestellte Systeme bietet aber nur im Falle eines Auftreten eines speziellen Ereignisses die Möglichkeit, daß ein Anruf ausgelöst wird, der den autorisierten Nachbarn informiert. Eine permanente Überwachung eines Objektes oder einer zu schützenden Person ist mithin mit diesem System nicht möglich.

Eine breite Anwendung können die vorgestellten Systeme z. B. auch bei Inhaussystemen finden, die einem Benutzer eine aktive Überprüfung ermöglichen. In diesem Fall wird ein Anruf mittels eines Bildtelefons in die eigene Wohnung zur Überprüfung selbst gestartet, um dort zu überprüfen, ob alles in Ordnung ist. Dies kann z.B. Anwendung finden, falls eine Person im Urlaub ist oder wenn sie z.B. hohe Geldbeträge oder wertvolle Wertgegenstände in der Wohnung aufbewahrt (Der TeleNachbar; Werbeprospekt der Alcatel SEL; Stuttgart).

Aus der deutschen Offenlegungsschrift DE 3827928 ist ein Bildfernsprechgerät mit einer Überwachungsschaltung bekannt. Hierbei werden in der Überwachungsschaltung Videobilder in einem Bildspeicher gespeichert und mit einem vorher abgespeicherten Bild verglichen. Bei einer Abweichung kann mittels einer automatischen Wähleinrichtung ein Alarm an eine überwachende Stelle gesendet werden. Dieses System dient ebenfalls der Inhausüberwachung.

Aus der Offenlegungsschrift US4825457 ist ein Anschlußgerät (digital communicator) bekannt, das über ein Funknetz verschieden Alarmdetektoren und Kameras automatisch über eine durch einen Alarm ausgelöste Wählverbindung an eine zentrale Überwachungseinrichtung verbindet oder der zentralen Überwachungseinrichtung durch Anwahl ermöglicht, Informationen bezüglich des Ortes der Überwachung abzurufen.

Aus der Offenlegungsschrift US3816662 ist eine Videotürsprechanlage bekannt, bei der die Videokommunikation mittels separater Videokameras am Eingang, einerseits, und dem Fernseher in der jeweiligen Wohnung, andererseits, über das hausinterne Kabelfernsehnetz erfolgt.

Demnach stellt sich die Aufgabe eine Vorrichtung zu schaffen, die der Fernüberwachung eines zu überwachenden Objektes einer zu schützenden Person dient. Ferner soll ein Verfahren zur Überwachung eines Objektes einer zu schützenden Person vorgesehen werden, welches der Person direkt ermöglicht zu erfahren, in welchem Zustand das Objekt befindet.

Dies wird erfindungsgemäß gelöst durch die Fernüberwachungsvorrichtung gemäß Patentanspruch 1.

Vorteilhaft erweist sich hierbei, daß ein zu überwachendes Objekt einer zu schützenden Person entweder einer permanenten Überwachung unterliegen kann, oder aber erst dann überwacht wird, wenn sich eine zu schützende Person dem Objekt nähert, also die Person eine Überwachung wünscht. Die zu schützende Person kann eine Sicherheitsabfrage des Objektes kurz vor ihrem Eintreffen an oder in dem Objekt vornehmen, indem eine Abfrage z.B. per Mobiltelefon in einer Überwachunszentrale erfolgt, wodurch sich für die zu schützende Person eine bequeme, sichere und billige Möglichkeit des Schutzes auftut.

Ein weiterer Vorteil ist, daß beispielsweise eine zu schützende Person, z.B. eine wichtige Persönlichkeit einer Firma, eine Überwachung seines privaten Grundstückes zu persönlichen Schutzzwecken durch den firmeneigenen Wachdienst erfolgen lassen kann. Daraus ergibt sich, daß hohe Kosten für eine persönliche Bodygard nicht auftreten oder reduziert werden können. Ebenso kann ein solcher Schutz über die direkte Verbindung zu einer Polizeistation oder aber zu einem privaten Wach- und Schließdienst erfolgen, wobei jeder Person eine verhältnismäßig günstige Möglichkeit des Personenschutzes zur Verfügung steht. Diese Art des Schutzes kann auch für große Wohnhauskomplexe verwendet werden, bei denen sich aufgrund der herrschenden Anonymität immer wieder Sicherheitsmängel auftun.

Weitere vorteilhafte Ausgestaltungen der Fernüberwachungsvorrichtung sind den Unteransprüchen 2 bis 4 zu entnehmen.

Hierbei erweist sich besonders vorteilhaft, daß von der Überwachungszentrale aus akustische und/oder visuelle Alarme an dem zu überwachenden Objekt ausgelöst werden können. Dies dient beispielsweise der Abschreckung eventueller Diebe oder Einbrecher.

Es kann von der Überwachungszentrale aus direkt ein Alarm in einer Notrufzentrale, beispielsweise bei der Polizei, ausgelöst werden, wodurch sich die Sicherheit der zu schützenden Person weiter erhöht.

Im folgenden wird anhand von Ausführungensbeispielen und anhand der Figuren die Erfindung näher erläutert. Folgende Figuren zeigen:
- Fig. 1: Darstellung einer Fernüberwachungsvorrichtung gemäß Patentanspruch 1,
- Fig. 2: Erstes Ausführungsbeispiel für eine Ausstattung des zu schützenden Objektes,
- Fig. 3: Zweites Ausführungsbeispiel für eine Ausgestaltung des zu schützenden Objektes.

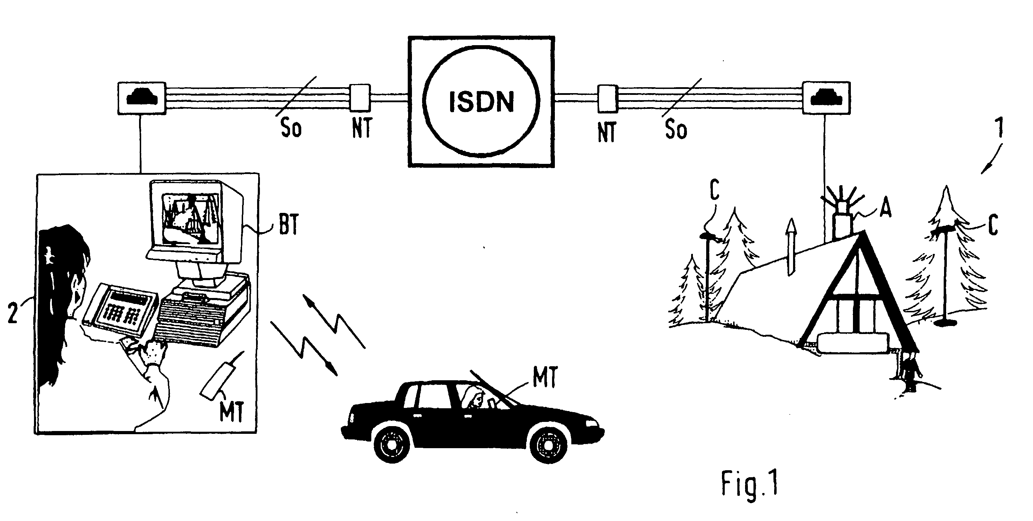

Im folgenden wird anhand von Fig. 1 die Erfindung näher erläutert.

Eine Fernüberwachungsvorrichtung für mindestens ein zu überwachendes Objekt 1 einer zu schützenden Person ist mit mindestens einer Videoaufnahmevorrichtung C ausgestattet. Das zu schützende Objekt 1, hier beispielsweise ein privates Grundstück mit Wohnhaus, ist ferner an ein Telekommunikationsnetz ISDN angeschlossen. Das Telekommunikationsnetz ist vorteilhafterweise das digitale ISDN-Netz. Ein Anschluß an das ISDN-Netz kann hierbei über die ausreichend bekannte S₀-Schnittstelle und ein entsprechendes Netzwerkterminal erfolgen.

Das zu überwachende Objekt 1 ist über das Telekommunikationsnetz ISDN mit einer Überwachungszentrale 2 verbunden. Die Überwachungszentrale 2 ist mit einem Bildtelefon BT zur Überwachung des Objektes ausgestattet. Das Bildtelefon kann beispielsweise ein handelsübliches Bildtelefon sein, z.B das Alcatel 2838. Ferner besitzt die Überwachungszentrale 2 einen Anschluß für ein Mobiltelefon MT um ein Informationsaustausch mit der zu schützenden Person zu ermöglichen. Über das Bildtelefon BT kann ein Verbindungsaufbau zu dem zu überwachenden Objekt 1 aufgebaut werden. Die von den dort vorhandenen Videoaufnahmevorrichtungen C, z.B. handelsüblichen Außenvideokameras, aufgenommenen Videodaten, werden über das Telekommunikationsnetz ISDN zu der Überwachungszentrale 2 gesendet, in der das Bild auf dem Bildtelefon BT reproduziert wird und überwacht werden kann. Eine Überwachung kann hierbei beispielsweise von einer Person vorgenommen werden, kann aber auch automatisiert werden, wie dies im Stand der Technik für ein Inhaussystem erläutert worden ist.

Ferner soll vorgesehen sein, daß von der Überwachungszentrale 2 aus eine Alarmanlage A an dem zu überwachenden Objekt 1 ausgelöst werden kann. Diese Alarmanlage A kann eine akustische und/oder visuelle Alarmanlage sein.

In einem weiteren Fall soll vorgesehen sein, daß von der Überwachungszentrale 2 aus ein Alarm direkt in einer Notrufzentrale ausgelöst werden kann. Die Notrufzentrale, z.B. eine Polizeinotrufzentrale, ist dann für weitere Aktionen, z.B. das Aussenden von Polizisten, verantwortlich.

Bei dem voran vorgestellten Fernüberwachungssystem bieten sich zwei Möglichkeiten. Die erste Möglichkeit ist, daß eine permanente Videoüberwachung eines zu überwachenden Objektes vorgenommen wird. Eine zweite Möglichkeit ist es, daß auf eine spezielle Abfrage hin eine Bildverbindung zu dem zu überwachenden Objekt 1 aufgebaut wird und dann, auf einen speziellen Hinweis hin oder einer speziellen Anforderung hin, eine Überwachung des zu überwachenden Objektes erfolgt.

Die kann beispielsweise dann erfolgen, wenn sich eine zu schützende Person diesem Objekt nähert, und sicher sein möchte, daß sich keine unberechtigte Person in der Nähe aufhält.

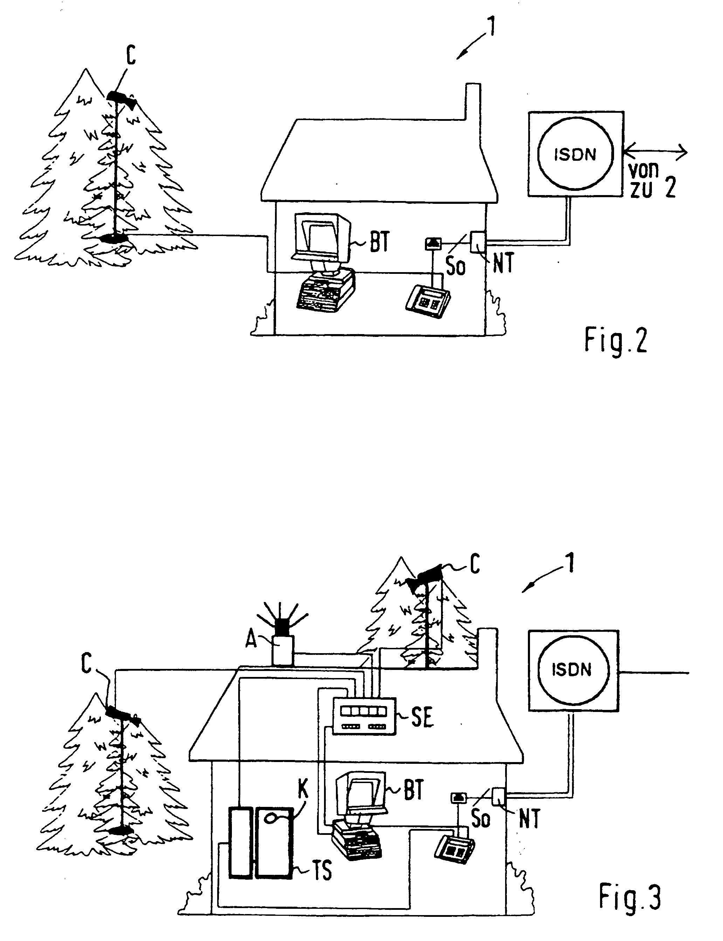

Im folgenden wird anhand von Fig. 2 ein Ausführungsbeispiel einer Ausstattung eines zu überwachenden Objektes 1 dargestellt.

Das zu überwachende Objekt 1 ist an ein Telekommunikationsnetz ISDN angeschlossen. Dies erfolgt beispielsweise über ein Netzwerkterminal NT und über eine S₀-Schnittstelle S₀. Das zu überwachende Objekt ist mit einem Bildtelefon BT ausgestattet und mit mindestens einer Videoaufnahmevorrichtung C, z.B. einer Außenkamera. Die Videoaufnahmevorrichtung C dient zur Außenüberwachung des zu schützenden Objektes und nimmt Außenbilder von diesem auf. Diese werden über das Bildtelefon BT und über den Anschluß an das Telekommunikationsnetz ISDN weitergegeben und zu einer Überwachungszentrale 2 weitergeleitet.

In dem hier vorliegenden Fall, daß innerhalb des zu schützenden Objektes 1 ebenfalls ein Bildtelefon BT vorgesehen wird, kann zum zusätzlichen Schutz innerhalb des Objektes eine Vorrichtung, wie diese im Stand der Technik 'TeleNachbar' beschrieben worden ist, ebenfalls vorgesehen werden. Dabei wird ein Sensor so eingerichtet, daß sich beim Auftreten eines speziellen Ereignisses, z. B. einer Bewegung innerhalb eines Raumes, eine Verbindung zu einer Überwachungszentrale automatisch aufbaut.

Im folgenden wird anhand von Fig. 3 ein zweites Ausführungsbeispiel einer Ausstattung eines zu schützenden Objektes 1 näher erläutert.

Das zu schützende Objekt 1 ist ebenfalls über ein Telekommunikationsnetz ISDN mit einer Überwachungszentrale 2 verbunden. Der Anschluß des Objektes an das Telekommunikationsnetz, hier das ISDN-Netz, erfolgt ebenfalls über die herkömmlichen, vorab erläuterten Mittel.

Das zu schützende Objekt 1 ist mit Videoaufnahmevorrichtungen C ausgestattet. In dem hier vorliegenden Beispiel sind zwei Videokameras dargestellt. Desweiteren befindet sich an dem zu überwachenden Objekt eine Alarmanlage A. Die Alarmanlage A kann visuellen aber auch akustischen Alarm geben. Innerhalb des zu überwachenden Objektes ist ebenfalls ein Bildtelefon BT vorhanden. Ferner ist das zu überwachende Objekt 1 mit einer Türsprechanlage TS ausgestattet, die über das Telekommunikationsnetz ISDN mit der Überwachungszentrale 2 verbindbar ist. Die Türsprechanlage TS, die sich beispielsweise an der Eingangstüre befindet, ist mit einer integrierten Kamera K ausgerüstet. Nähert sich beispielsweise eine Person der Eingangstür, und betätigt diese die Klingel, so wird für den Fall, daß der Besitzer des Objektes nicht zu Hause ist oder nicht öffnen möchte, automatisch eine Verbindung zu einer Überwachungszentrale aufgebaut. Mittels der integrierten Kamera K kann festgestellt werden wer sich an der Tür befindet und ferner kann eine Aufnahme der Person aufgenommen werden und gespeichert werden. Über eine zusätzliche Verbindung per Sprachübertragung zu der Überwachungszentrale, kann eine Person ihr Anliegen vortragen und sich gegebenenfalls als berechtigte Person ausweisen. Dieses Merkmal hat den zusätzlichen Effekt, daß eine an der Tür befindliche Person nicht feststellen kann, ob jemand zu Hause ist oder nicht. Vielmehr wird einem immer der Eindruck vermittelt, daß das Objekt nicht alleingelassen ist.

Eine weitere Ausgestaltung dieser Türsprechanlage TS ist es aber auch, daß im Falle, daß der Besitzer sich nicht im Hause befindet oder die Türe nicht öffnen möchte, die integrierte Kamera K der Türsprechanlage TS aktiviert wird und ein Bild der sich an der Türe befindlichen Person aufgezeichnet und abgespeichert wird. Die Person kann somit beispielsweise eine Bildnachricht hinterlassen, um den Besitzer des Objektes zu informieren, weshalb er sich an der Tür befand und was sein Anliegen war.

Sowohl das Bildtelefon BT als auch die Türsprechanlage TS, als auch die Alarmanlage A, als auch die Videoaufnahmevorrichtungen C sind alle mit einer Steuereinheit SE verbunden. Die Steuereinheit SE ist über das digitale Telefonnetz ISDN steuerbar, so daß beispielsweise von der Überwachungszentrale 2 aus eine Alarmanlage A gesteuert werden kann, das Bildtelefon BT gesteuert werden kann, die Türsprechanlage TS gesteuert werden kann oder aber auch die Außenkameras C gesteuert werden können.

Im folgenden soll anhand eines Ausführungsbeispiels ein Verfahren zur Überwachung eines Objektes einer zu schützenden Person näher erläutert werden (ohne Fig.). Gemäß dem vorliegenden Fall, daß sich eine zu schützende Person einem zu überwachenden Objekt 1 nähert, wird von der zu schützenden Person beispielsweise per Mobiltelefon MT eine Verbindung zu einer Überwachungszentrale 2 aufgebaut, um nachzufragen, in welchem Zustand sich das zu überwachende Objekt 1 befindet. Die so angefragte Überwachungszentrale 2 baut eine Bildverbindung über ein Telekommunikationsnetz ISDN zu dem zu überwachenden Objekt 1 auf. Das zu überwachende Objekt 1 wird beispielsweise per Video überwacht. Zur Kontrolle des Zustandes des zu überwachenden Objektes wird eine Videoabfrage, der sich an dem zu überwachenden Objekt befindlichen Videoaufnahmevorrichtungen C gestartet. Danach erfolgt eine Auswertung der Videoabfrage und eine Information über den Zustand des Objektes wird an die zu schützende Person weitergegeben.

Für den Fall, daß von der Überwachungszentrale 2 aus an die zu schützende Person die Information gegeben wurde, daß sich eine unberechtigte Person in der Nähe des Hauses zu schaffen gemacht hat, kann die zu schützende Person vorsehen sich nicht dem Objekt zu nähern.

Für den Fall, daß von der Überwachungszentrale 2 aus die Information gegeben wurde, daß sich das zu schützende Objekt in einem einwandfreien Zustand befindet, kann die Person sich beruhigt dem zu überwachenden Objekt nähern.

Als weiteres Merkmal kann vorgesehen werden, daß die zu schützende Person weiter per Videoüberwachung überwacht wird, und zwar solange bis sie sich innerhalb des Hauses befindet und eine weitere Videoüberwachung nicht mehr wünscht. Somit ist gewährleistet, daß eine zu schützende Person bis zum Betreten des zu überwachenden Objektes geschützt ist.

Um zu gewährleisten, daß sich nur berechtigte Personen über den aktuellen Zustand eines zu überwachenden Objektes informieren, kann beispielsweise eine Passwortabfrage vorgesehen werden. Jede weitere bekannte Zugangskontrolle für autorisierte Personen ist hierbei aber ebenfalls denkbar, wie z.B. per Spracherkennung.

Durch eine weitere vorteilhafte Ausgestaltung des Innenraumes des zu überwachenden Objektes 1 mit einem Bildtelefon BT, kann gewährleistet werden, daß für den Fall, daß sich dennoch eine unberechtigte Person Zugang zu dem zu überwachenden Objekt 1 verschaffen konnte, innerhalb eine weitere Überwachung stattfindet. Dies führt zu einer weiteren Schutzerhöhung.

Eine solche Überwachung kann auch in großen zu überwachenden Objekten mit einer Vielzahl von zu schützenden Personen verwendet werden, wie z. B. in einer Wohnsiedlung. Hierbei sind alle Bewohner eine zu schützende Person und können per Videoüberwachung bis zur Wohnungstüre begleitet werden. Insbesondere im Hinblick auf die große vorherrschende Anonymität bei großen Wohnkomplexen, die zu einer ständigen Gefahrenerhöhung für Leib und Leben führt, kann ein solcher Dienst zukünftig ein breites Anwendungsspektrum finden.

## Patentansprüche

1. Steuereinheit (SE) mit Verbindungen zu einer Türsprechanlage (TS) mit integrierter Kamera (K) und einem Telekommunikationsnetz (ISDN), bei der die Türsprechanlage (TS) automatisch über eine Sprach- und Bildverbindung über das Telekommunikationsnetz (ISDN) mit einer Überwachungszentrale (2) verbindbar ist.

2. Steuereinheit (SE) nach Anspruch 1 **dadurch gekennzeichnet, daß** die von der integrierten Kamera (K) aufgezeichneten Bilder abspeicherbar sind.

3. Steuereinheit (SE) nach Anspruch 1 **dadurch gekennzeichnet, daß** die Türsprechanlage (TS) über das Telekommunikationsnetz (ISDN) und die Steuereinheit (SE) von der Überwachungszentrale (2) steuerbar sind.

4. Steuereinheit (SE) nach Anspruch 1 **dadurch gekennzeichnet, daß** die Steuereinheit (SE) Verbindungen zu einem Bildtelefon (BT), einer Alarmanlage (A) und Außenkameras (C) aufweist und das Bildtelefon (BT), die Alarmanlage (A) und die Außenkameras (C) über das Telekommunikationsnetz (ISDN) und die Steuereinheit (SE) von der Überwachungszentrale (2) steuerbar sind.

## Claims

1. A control unit (SE) connected to a door intercom system (TS) having an integrated camera (K) and to a telecommunications network (ISDN) wherein the door intercom system (TS) is automatically connectable to a central monitoring station (2) by a voice and video link via the telecommunications network (ISDN).

2. A control unit (SE) as claimed in claim 1, **characterized in that** the pictures taken by the integrated camera (K) are storable,

3. A control unit (SE) as claimed in claim 1, **characterized in that** the door intercom system (TS) is controllable via the telecommunications network (ISDN), and that the control unit (SE) is controllable by the central monitoring station (2).

4. A control unit (SE) as claimed in claim 1, **characterized in that** it has connections to a video telephone (BT), to an alarm system (A), and to outdoor cameras (C), and that the video telephone (BT), the alarm system (A), and the outdoor cameras (C) are controllable by the central monitoring station (2) via the telecommunications network (ISDN) and the control unit (SE).

## Revendications

1. Unité de commande (SE) comprenant des connexions à un interphone (TS) avec une caméra intégrée (K) et à un réseau de télécommunication (RNIS), dans laquelle l'interphone (TS) peut être relié automatiquement à un centre de surveillance (2) par une communication vocale et vidéo à travers le réseau de télécommunication (RNIS).

2. Unité de commande (SE) selon la revendication 1, **caractérisée en ce que** les images enregistrées par la caméra intégrée (K) peuvent être stockées.

3. Unité de commande (SE) selon la revendication 1, **caractérisée en ce que** l'interphone (TS) peut être commandé par le centre de surveillance (2) à travers le réseau de télécommunication (RNIS) et l'unité de commande (SE).

4. Unité de commande (SE) selon la revendication 1, **caractérisée en ce que** l'unité de commande (SE) présente des connexions avec un visiophone (BT), un système d'alarme (A) et des caméras extérieures (C) et que le visiophone (BT), le système d'alarme (A) et les caméras extérieures (C) peuvent être commandés par le centre de surveillance (2) à travers le réseau de télécommunication (RNIS) et l'unité de commande (SE).
